# EUROPEAN PATENT SPECIFICATION

(11) **EP 0 567 422 B1**
(45) Date of publication and mention of the grant of the patent: **05.06.1996**
(21) Application number: 93500005.9
(22) Date of filing: 22.01.1993
(51) Int. Cl.: B62B 7/08

(54) **Foldable baby carriage frame and cradle seat couplable to same**
Klappbarer Kinderwagenrahmen und koppelbarer Wiegesitz
Châssis pliable pour voiture d'enfant et siège couplable à celui-ci

(30) Priority: 21.04.1992 ES 9200976; 19.06.1992 ES 9200976; 21.09.1992 ES 9201882; 20.11.1992 ES 9201882
(43) Date of publication of application: 27.10.1993
(73) Proprietor: JANE S.A., E-08184 Palau de Plegamans (Barcelona) (ES)
(72) Inventor: Jané Cabagnero, Ramon, c/o Jané, S.A., E-08184 Palau de Plegamans (Barcelona) (ES)
(74) Representative: Pastells Teixido, Manuel

(56) References cited:
- EP-A- 0 483 042
- GB-A- 2 167 119
- GB-A- 2 169 793
- US-A- 4 765 645

## Description

This invention refers to a foldable frame with cradle-seat couplable to the same for baby carriages.

The applicant is the title holder of the Invention Patent ES P9002663 which object is a frame for baby carriages comprising a U-shaped inverted handlebar slidely connected by its side handlebar sections to the front feet, said sliding motion being guided by flanges and in the side handlebar sections are connected respective interlocked guide-flanges whereto the upper ends of the pertinent rear feet are hinged. Said frame also comprising a an approximately U-shaped section comprising some, vertical arms each of which is upwardly hinged to the upper and of the corresponding flange and downwardly hinged to intermediate zone of the rear feet. This frame also comprising two side stringers for the seat removable support, which stringers are rearwardly hinged at said vertical arms.

Transversally folded baby carriages are also known whereto the frame sides are mutually related with two crossed arms hinged in a transversal arrangement and the handlebar, the cross-members joining the feet and the seat front handrail are hinged by their middle section, being flexible seat and backrest and the latter hinged to the seat with locking means onto the different inclined positions possibly addopted, such as it happens in the baby carriage described in the patent GB-A-2 167 119.

Several cradle-seat models consisting in a flexible seat frame having two side longitudinal supports with two armrest sides and front handrail provided with hinged sections, the lower part of which frame is hinged a flexible backrest adopting several lockingly inclined positions and a footrest are also ready known. Also is known that these cradle-seats are detachably engaged to the baby carriage frames, and can be provided facing the front or rear.

In most of these cases, above all in anyone where the frame is transversally folded, the cradle-seat must be removed in order to fold the carriage since the framework of the former is transversally rigid, whereby any individuals pushing the baby in the carriage usually mothers or baby sitters when having to fold the carriage several operations have to be made which generally are cumbersome and found at one side with the folded frame and at the other, with the cradle-seat and additionally, with the baby, and cannot carry by themselves all that for example, when going in a public transport.

It is an object of this invention an improvement of the frame being the object of said patent ES P9002663 ono which is engaged a cradle-seat allowing also additionally the frame to be folded from top to bottom and its transversal folding, i.e. mutually approaching its two sides with the purpose to removably reduce its volumen, additionally with the advantage of providing the carriage with another locking pin which prevent a random folding in case the locking pins mounted at the front feet failed or remained defectively positioned.

Characteristically in this new frame is the fact that the transversal crossed arms are hinged by their lower ends to the vertical arms and by their upper ends to the lower end of the handlebar sections and by the fact that the lower sections of each said crossed arms is hingedly connected to the middle area of the vertical arm at the opposite side of the chassis with a tie-bar.

Handlebar central shaft hinging comprises a locking pin which locks the frame at the folding position.

Regarding the two hinged sections making up the cross-member provided between the front feet, they are advantageously elastically addressed towards its extended position.

Characteristically is also the existence of an eccentric locking pin which through a partial rotation of its circular control is determining the locking part linear displacement ensuring thereby the seat of cradle-cot engagement at the stringers provided in the frame for said purpose and which stringers are rearwardly hinged to said vertical arms.

The cradle-seat is folded together with the carriage frame, i.e. it is not needed to remove the carriage to have it folded. All that removes the previously cited problem and allows to save the carriage assembly in a very reduced space, either in a car boot or at home.

Characteristically relevant of this cradle-seat is the fact that of comprising an automatic locking pin device which when the cradle-seat is removed from the carriage frame, the cradle-seat transversal folding means are locked preventing thereby its random folding and ensuring too the baby's integrity.

To obtain the cradle-seat transversal folding, the frame side supports of the seat of the backrest and of the footrest are mutually related with hinged arms.

These hinged arms in the case of the seat, are made up with two mutually hinged crossed arms additionally comprising a locking caliper being under the effects of elastic means which ensured a locking of the folding position of said crossed arms and that of use of the cradle-seat away from the carriage.

When the seat is coupled to the corresponding side stringers of the carriage frame, the operation of the above mentioned automatic locking device is cancelled as a crosswise hinged and divided rod hinged transversally to one of the longitudinal supports of the seat frame, and which protrudes at one end through the corresponding side armrest, makes contact with said end with the frame stringer and turns in such a way that the other end of the rod unlocks the above mentioned caliper, thereby allowing the crossed arms to fold when the cradle seat receives the transversal folding pressure exerted when the frame is folded.

These and other features will be understood more clearly from the detailed description which follows, together with six sheets of drawings, which serve as a practical representation of the carriage, and are shown only as a non limiting example of the scope of the invention.

In the drawings:
Figure 1 shows a perspective of the frame assembly in the open position.
Figure 2 is a schematic top view of the cross-hinged arms and the tie rods which allow the frame to be folded transversally.
Figures 3 and 4 show a top view and sectional elevation, respectively, of the hinge and locking device of the two elements which make up the middle section of the handlebar.
Figure 5 shows a top view of the folded frame.
Figure 6 shows a perspective of the eccentric locking pin which locks the seat and/or cradle carrier coupling.
Figures 7 and 8 show, schematically, an elevation of the position of this locking device and the locking element in the locked and unlocked position, respectively.
Figure 9 shows a perspective of the cradle seat coupled to the frame of the baby carriage.
Figure 10 shows a top view of this assembly, cradle seat and frame, in the folded position.
Figure 11 shows a side elevation of the cradle seat.
Figure 12 shows a top plan view of a cradle seat section.
Figure 13 shows a bottom plan view of the cradle seat.

As shown in the drawings, the frame is made up of a handlebar 1, of general U shape, whose middle section, which forms the pushing handle, consists of two L-shaped sections 2 and 3, of which one section, shorter and tubular, is inserted, with capacity for partial coaxial turning, on the corresponding 4 and 5 side sections of the handlebar, while the other sections of the L-shaped elements are hinged together by a transversal rod 6 parallel to the handlebar sections. Partial coaxial turning of the 2 and 3 L-shaped elements is achieved by the use of crosswise arranged slots 7 on same which are adjusted onto a fixed pivot on the 4 and 5 side sections of the handlebar, and which are not shown in the drawings.

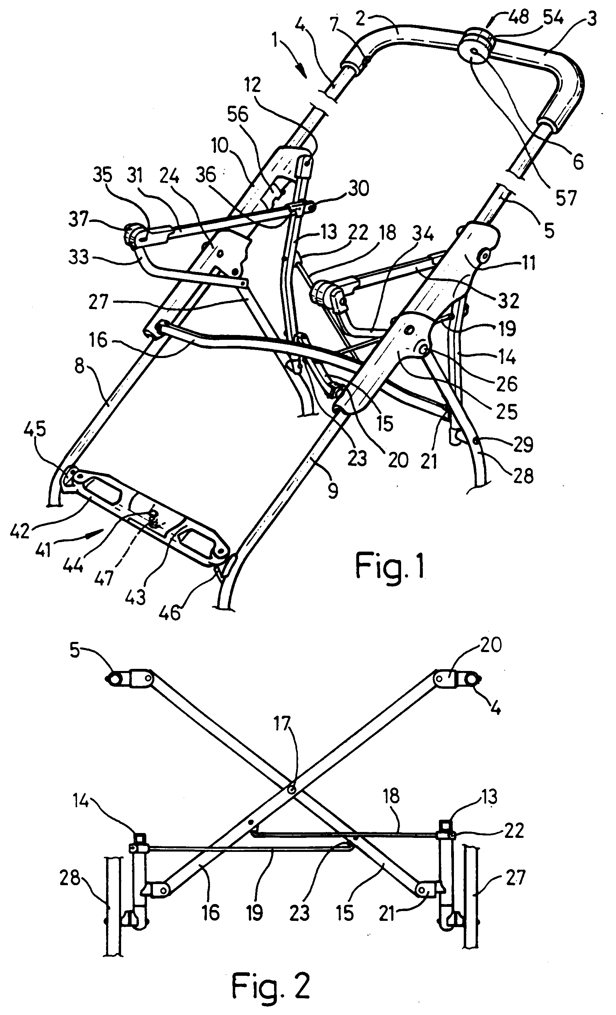

The handlebar 1 is slidely connected to the front feet 8 and 9 by their side sections 4 and 5 and is guided in movement by brackets 10 and 11 to their upper end upperly are hinging with a pin 12 each of the vertical arms 13 and 14, to which are hinged by their lower ends the arms 15 and 16, which are cross-hinged at their centre 17 (Fig. 2), which at the other end are hinged to the lower ends of the 4 and 5 side sections of the handlebar.

The lower sections of each said crossed arms 15 and 16 are hingedly connected by a tie rod 18 and 19 to the middle section of the vertical arms 13 and 14 at the opposite side of the frame.

The end hinges 20 and 21 of the crossed arms 15 and 16, as well as 22 and 23 of the tie rods 18 and 19 are double and are parallel to two axis arranged perpendicularly to each other.

To The side sections 4 and 5 of the handlebar, below the flanges 10 and 11, are respectively connected guide brackets 24 and 25 through which slide the front feet 8 and 9, on whose guide flanges are is hinged with a pin 26 the upper ends of the corresponding rear feet 27 and 28, at the intermediate zone of which are downwardly hinged by pins 29, the vertical arms 13 and 14.

At the upper section of said vertical arms are hinged by a pin 30 the rear ends of the side stringers 31 and 32 which at their front end are hinge supported by their respective angular struts 33 and 34, which at their bottom end are hinged to the upper section of their respective rear feet 27 and 28.

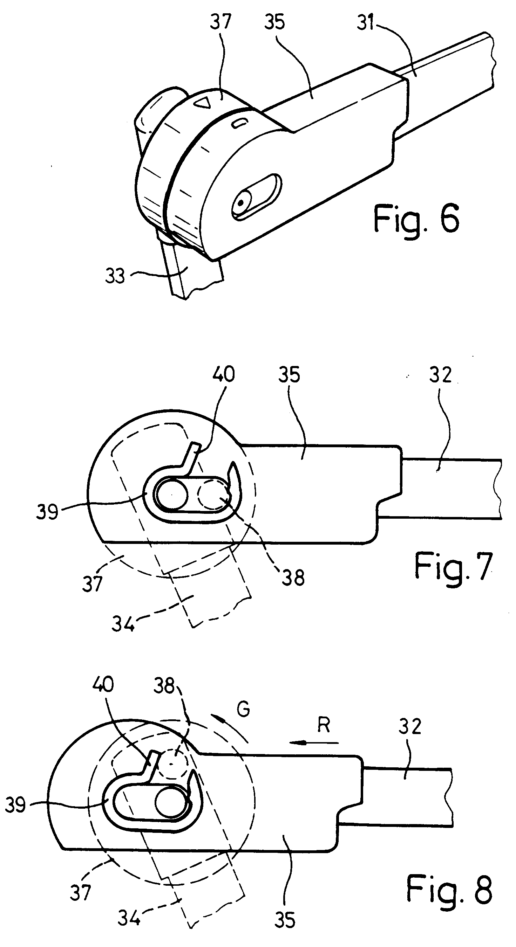

These stringers are provided with devices 35 and 36 which allow a seat to be moveably coupled on them. The front devices 35 are provided with a pin to ensure said coupling and consists of a circular control knob 37, which by partial rotation G and the intervention of an eccentric internal protrusion 38 determines the rectilinear displacement R of the locking device 35 and of which entails an internal location 39 with a radial branch 40 upon which acts said eccentric projection (Figures 7 and 8).

The transversal folding of the chassis, bringing together the side elements, is assisted by the hinged crossed arms 15 and 16, the tie rods 18 and 19, the hinges of the handlebar middle section 2-3 and the hinges of the cross-element 41 which joins the front feet 8 and 9 together.

This cross-element consists of two sections 42 and 43 hinged together by a pin 44 and hinged at their ends to their matching squares 45 and 46 fixed to the front feet, with a spiral spring 47 mounted on the central hinge 44 which pushes said sections to their extended position in which they locate in prolongation to each other.

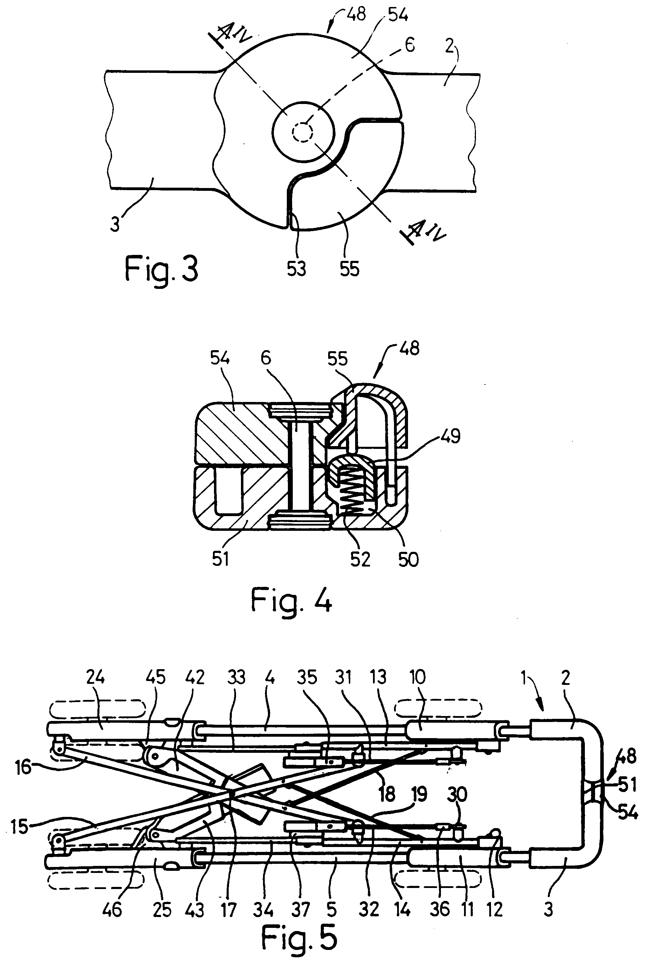

The hinge of the central shaft 6 of the handlebar has a pin 48, which locks it in the extended position, the locating pin consisting of a stopping dog 49 (Figure 4) seated in the recess 50 of the disc-shaped extension 51 at the end of the L-section 2 of the handlebar, and which protrudes from said recess by the force of a spring 52 and is inserted into a notch 53 at the outer edge of the other disc-shaped extension 54 at the end of the other L-section 3 of the handlebar, on whose stopping dog there is an external push button 55 which locates the mentioned notch and when pressed seats the stopping dog 49 inside the seat 50, allowing free rotation between the two superposed expansions 51 and 54 around the shaft 6 which passes through their centre.

In addition to this locating pin the frame also has a locating pin 56 on each side to ensure locking of the extended in use position, whose pin, for example, is of the same specifications as those for the frame of the previously mentioned ES-P9002663 patent.

This frame may be complemented with a tray which is coupled to the lower part with suitable devices.

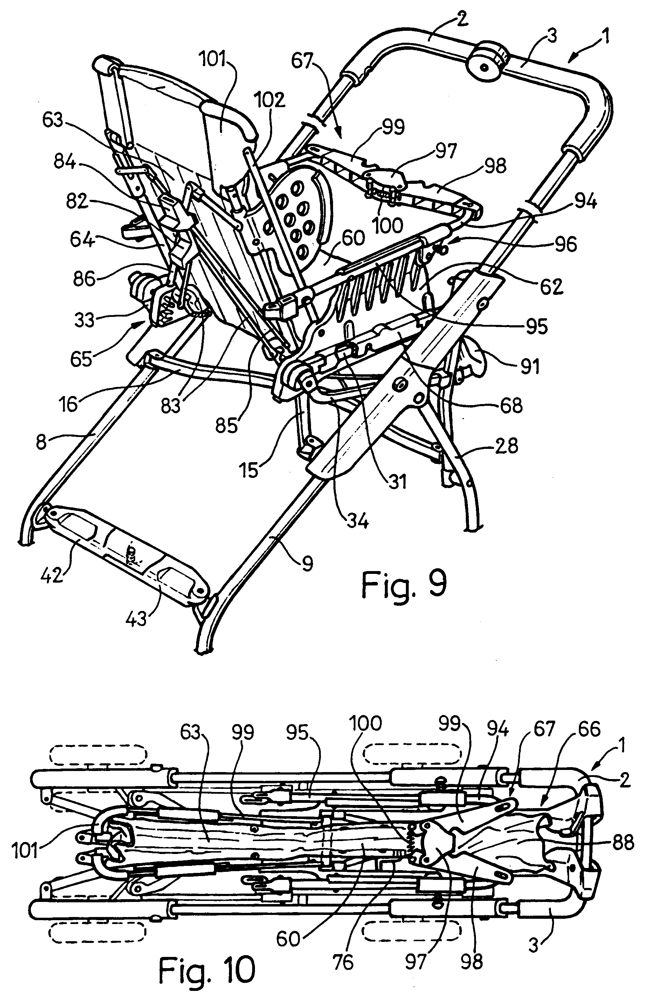

As shown in Figures 9 and 10 the cradle seat is coupled to the foldable baby carriage for which this cradle seat has been mainly designed, and is made up of flexible seat frame 60, consisting of two lateral longitudinal support elements 61 and is provided with lateral arm rests 62. To the lower part of this frame is hinged the flexible back rest frame 63 consisting of two lateral longitudinal support elements 64 on whose lateral part of the frame there are devices 65 for locking the back rest 63 at different angles.

To the front part of the seat frame is hinged a footrest 66, and on the lateral arm rests 62 is hinged a sliding type front railing 67, whose lower lateral sections on the exterior face are provided with chanelled extensions 68 which are fitted to their respective lateral stringers 31 of the baby carriage frame.

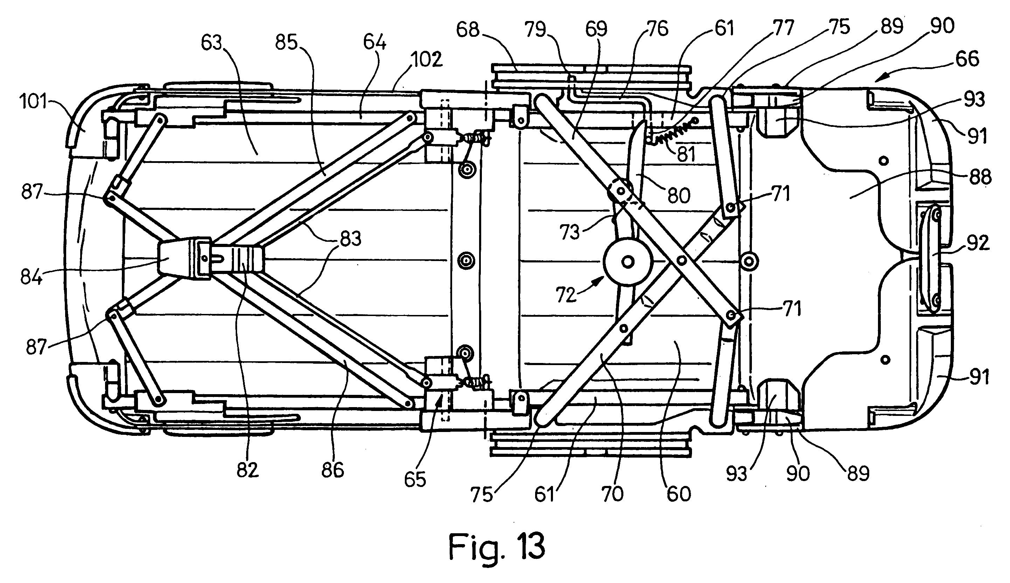

The two longitudinal supports 61 of the seat frame are joined together at the lower end by two cross-hinged arms 69 and 70 (Figure 13) of which one section is hinged through an intermediate point 71. The other sections of said two arms are joined together by a locking caliper 72 which locks the cradle seat in the open, useful position. At the point where the caliper is hinged to the arm 69, a spring 73 is mounted which ensures the open position of the locking caliper to maintain the locked position.

At their free ends said cross-hinged arms 69 and 70 are bent upward to form vertical sections 74 which are coupled together and may be rotated coaxially in their seats 75 set in the lateral arm rests 62.

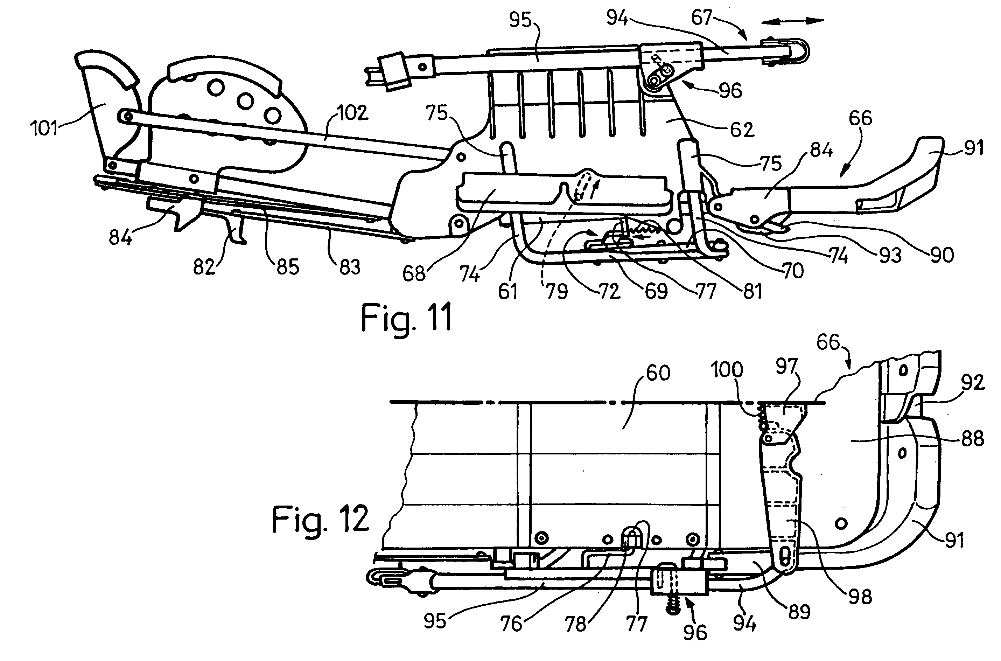

Means have been envisaged on the cradle seat which, when coupled to the frame of the baby carriage, release the locking caliper 72 to allow crosswise folding of the cradle seat together with the folding of the frame, as shown in Figure 10. The indicated devices are made up of a bent rod 76, which at one end 77, directed downward, is hinged by means of a bracket 78 (Figure 12) to one of the longitudinal supports 61 of the seat frame, while at the other end 79 (Figure 13) the rod protrudes from the channeled extension 68 of the corresponding lateral arm rest 62.

On coupling the cradle seat onto the frame of the baby carriage, the end 79 of the rod 76 makes contact with the corresponding lateral stringer 31 of the frame, by which said rod is rotated through the hinge on the bracket 78, whose rotation acts upon the other end 77 of the rod, which pushes the extended arm 80 of the locking caliper, overcoming the resistance of the spring 73 and releasing said caliper, by which the cradle seat can be folded crosswise together with the frame.

When the cradle seat is removed with respect to the frame, the locking caliper 72 is locked again and the bent rod 76 is maintained in its inactive position, as its end 77 is subjected to the traction of a spring 81 fixed to the corresponding longitudinal support element 61.

The inclined position locking devices 65 of the back rest are released by means of a common central control 82, which is hinged with two diverging the rods 83 to said devices, whose control is coupled slidewise on a support 84 coupled on the hinge point of two cross-hinged arms 85 and 86 which are joined together at the two longitudinal supports 64 of the back rest frame, of which one of its sections is hinged in turn through an intermediate point 87.

The leg rest is made up of a flexible sheet 88, and consists of a frame with two lateral support elements 89 provided with locking devices 90 for the different inclined positions of the leg rest, and to which are coupled, with optional coaxial rotation capacity, the angular elements 91 located at the side and the front half of the leg rest, and which are joined together hingewise through its front section by a the rod 92.

The lateral support elements 89 of the frame of the leg rest are at the lower end made up of their respective blocks 93 with lower inclined face, through which the leg rest is pushed upward by the cross-hinged arms 69 and 70 of the seat during transversal folding of the cradle seat if the leg rest is in the lowered position.

The front railing 67 is made up of two lateral arms 94 which are inserted telescopically into the upper tubular sections 95 of the lateral arm supports 62, and which are retained in different protruding positions by means of a locking device 96 so as to adapt its length should the seat be used as such or as a cradle. The front section of the railing consists of three sections, one central section 97 and the other two 98 and 99 which are longer lateral sections, hinged together, and are held in alignment by means of stopping dogs and the pressure of a spring 100, which is extended when the front railing is folded toward the interior of the seat when the cradle seat is folded (Figure 10).

The back rest of the cradle seat is provided with a hinged head 101, which is coupled laterally with tie rods 102 to the lateral arm rests 62 to achieve rotation and lock the end of the back rest in its folded position (Figure 11)

The cradle seat is finished with its corresponding seating pad, and can be generally fitted to foldable frames that are folded in a way similar to the one described.

## Claims

1. Folding frame with cradle-seat couplable to same for baby carriages, this frame consisting of:
- a handlebar (1) in an inverted U-section and hinging according to shaft (6) at its middle section and slidably connected by its side sections (4 and 5) to front feet (8 and 9) in a guided sliding by means of flanges (10 and 11) to which side sections (4 and 5) are connected respective guide-flanges (24 and 25) wherein by means of a pin (26) the upper ends of the corresponding rear feet (27, 28) are hinged;
- an approximately U-shaped part comprising vertical arms (13 and 14) whose middle section is made up with two arms (15 and 16) hingedly crossed in a transversal arrangement, the vertical arms (13 and 14) being each upwardly hinged with a pin (12) to the upper end of the corresponding flange (10, 11) and downwardly hingedly by means of pins (29) in the middle section of the rear feet (27 and 28);
- two side stringers (31 and 32) for the removable seat supports, which stringers are rearwardly hinged to the vertical arms (13 and 14), and
- a cross-member (41) with middle hinging joining the front feet (8 and 9) and the cradle-seat comprising;
- a flexible seat frame (60) having two longitudinal side supports (61);
- two side armrests (62) provided with a front handrail (67) with three hinged sections (97, 98, 99);
- a flexible backrest frame (63) hinged to the lower part of the seat frame (60);
- side locking means (65) for locking the backrest in different inclined positions, and
- a footrest (66),
**characterized** in that said crossed arms (15 and 16) are hinged at their lower ends to the lower ends of the vertical arms (13 and 14) and at their upper ends to the lower end of the handlebars sections (4 and 5) and in that the lower section of each of said crossed arms (15 and 16) is hingedly connected to the middle section of the vertical arm (13 and 14) on the opposite side of the frame by means of a tie-bar (18 and 19).

2. Foldable frame, with cradle seat couplable to same, for baby carriages, as per Claim 1, in which the hinge of the central shaft (6) of the handlebar (1) has a locating pin (48) which locks it in the extended position, the pin consisting of a stopping dog (49) elastically impelled (52) toward its active antirotational position, and which is activated manually by pressing an exterior pushbutton (55) to displace it toward its passive position to obtain free movement of the hinge.

3. Foldable frame, with cradle seat couplable to same, for baby carriages, as per Claim 1, in which the end hinges (20,21 and 22,23) of the mentioned arms (15 and 16), and of the tie rods (18 and 19) which are parallel to two axis arranged perpendicularly to each other.

4. Foldable frame, with cradle seat couplable to same, for baby carriages, as per Claim 1, in which the two hinged sections (42 and 43) of the cross element (41) which joins together the front feet(8 and 9) are elastically impelled (47) toward their extended position.

5. Foldable frame, with cradle seat couplable to same, for baby carriages, as per Claim 1, in which is envisaged at the front end of the stringers (31 and 32) for the support of the cradle seat, a locating pin which ensures the coupling of this to the stringers, and which consists of a circular control (37), which by means of partial rotation and by means of a protruding eccentric (38), determines the rectilinear displacement of the locking part (35) which is provided with an internal location (39) for this purpose, with a radial extension (40) upon which acts said protruding eccentric (38).

6. Foldable frame, with cradle seat couplable to same, for baby carriages, as per Claim 1 characterized by the two lateral elements of the seat are joined together at the lower part by two cross-hinged arms (69 and 70), which have one of their sections hinged, in turn, to a middle point (71), the other sections of said arms being joined together by means of a locking caliper (72) which locks it in the cradle seat's useful extended position, the locking of which is secured by an elastic mechanism (73).

7. Foldable frame, with cradle seat couplable to same, for baby carriages, as per Claim 6, in which the cross-hinged arms (69 and 70) bend upward (74) at their free ends, and are coupled, with optional coaxial rotation, in their respective seats (75) which correspond to the lateral arm rests (62).

8. Foldable frame, with cradle seat couplable to same, for baby carriages, as per Claim 6, in which mechanisms have been envisaged which, when the cradle seat is coupled to the frame of the baby carriage, unlock the locking caliper (72) of the cross-hinged arms (69 and 70), thereby allowing the transversal folding of the cradle seat together with the folding of the baby carriage frame.

9. Foldable frame, with cradle seat couplable to same, for baby carriages, as per Claim 8, in which said mechanisms are made up of a divided rod (76) which is hinged crosswise (78) on one of the longitudinal supports (61) of the seat frame, and which at one end (77) protrudes through the corresponding lateral arm rest (62) and rotates when it makes contact with the lateral stringer (31) of the baby carriage frame when the cradle seat is coupled to it, whose rotational movement is received at the other end (79) of said rod (76), and while rotating pushes one of the extended arms (80) of the locking caliper (72), thereby unlocking it.

10. Foldable frame, with cradle seat couplable to same, for baby carriages, as per Claim 9, in which the divided rod (76) is joined by elastic elements (81) which maintain it in its inactive position.

11. Foldable frame, with cradle seat couplable to same, for baby carriages, as per Claim 6, in which the lateral locking mechanisms (65) of the inclined position of the back rest, are unlocked by a common central control (82) which by means of divided tie rods (83), are hinged to said lateral mechanisms.

12. Foldable frame, with cradle seat couplable to same, for baby carriages, as per Claim 11, in which the common central control (82) is coupled slidewise on a support (84) fixed at the hinge point of the two crossed arms (85 and 86) which join together the two longitudinal supports (64) of the frame of the flexible back rest (63).

13. Foldable frame, with cradle seat couplable to same, for baby carriages, as per Claim 6, in which the leg rest is flexible (88) and has a framework consisting of two lateral supports (89), provided with a locking mechanism (90) for the different inclined positions of the leg rest (66), to which are coupled, with optional coaxial rotation, the respective angular elements (91) which are hinged together at the front (92).

14. Foldable frame, with cradle seat couplable to same, for baby carriages, as per Claim 13, in which the lateral supports (89) of the framework of the leg rest (66) have their respective lower blocks (93) with inclined working face by which, if the leg rest is in the lower position, it is pushed upward by the cross-hinged arms (69 and 70) of the seat when the cradle seat is folded transversely.

15. Foldable frame, with cradle seat couplable to same, for baby carriages, as per Claim 6, in which the hinged frontal section (97,98,99) of the railing (67) folds toward the interior of the seat, and has elastic elements (100) which maintain it in the working position.

## Patentansprüche

1. Faltrahmen mit an demselben anbaubarem Liegesitz für Sitz-Kinderwagen, der Faltrahmen bestehend aus:
- einer Lenkstange (1) in umgekehrter U-Form in seinem mittleren Abschnitt an Achse (6) angelenkt an seinen Seitenarmen (4 und 5) an den Vorderbeinen (8 und 9) verschiebbar und vermittels Flanschen (10 und 11) gleitend geführt, an welchen Seitenarmen (4 und 5) Führungsflansche (24 und 25) angesteckt sind, an welchen vermittels dem Anlenkstift (26) die oberen Enden der entsprechenden Hinterbeine (27,28) angelenkt sind;
- ein ungefähr U-förmiges Element, welches senkrechte Arme (13 und 14) beinhaltet, deren mittlerer Abschnitt aus zwei Armen (15 und 16) besteht, die gekreuzt in Querstellung angelenkt sind, wobei jeder der senkrechten Arme (13 und 14) oben vermittels eines Anlenkstiftes (12) am oberen Ende des entsprechenden Flansches (10,11) angelenkt ist, während dieselben unten vermittels Anlenkstiften (29) am mittleren Abschnitt der Hinterbeine (27 und 28) angelenkt sind;
- zwei Seitenholme (31 und 32) als abnehmbare Stützen des Sitzes, welche Holme hinten an den senkrechten Armen (13 und 14) angelenkt sind, und
- eine Querstrebe (41) mit Mittelgelenk, welche die Verbindung mit den Vorderbeinen (8 und 9) herstellt, wobei der Liegesitz seinerseits folgendes beinhaltet:
- einen Rahmen für den nachgiebigen Sitz (60) welcher zwei seitliche Längsstützen (61) aufweist,
- zwei seitliche Armstützen (62) welche mit einer Frontschranke (67) ausgestattet sind, welche sich ihrerseits in drei gelenkig miteinander verbundenen Teile (97,98,99) gliedert,
- ein Rahmen für die nachgiebige Rücklehne (63), welcher an dem unteren Teil des Sitzrahmens (60) angelenkt ist,
- seitliche Verriegelungen zur Verriegelung der Rücklehne in deren verschiedenen Neigungsstellungen, sowie
- eine Beinstütze (66),
**dadurch gekennzeichnet** dass die genannten gekreuzten Arme (15 und 16) an deren unteren Enden an den senkrechten Armen (13 und 14) und an deren oberen Enden an die unteren Enden der Lenkstangenarme (4 und 5) angelenkt sind und dadurch, dass die unteren Abschnitte jedes der genannten gekreuzten Arme (15 und 16) an die Mittelteile der senkrechten Arme (13 und 14) auf der gegenüberliegenden Seite des Rahmens vermittels einer Zugstrebe (18 und 19) angelenkt sind.

2. Faltrahmen, mit an denselben anbaubarem Liegesitz, für Sitz-Kinderwagen, gemäss Patentanspruch 1, in welchem die Anlenkung der Mittelachse (6), der Lenkstange (1) eine Verriegelung (48) beinhaltet, welche den Rahmen in der gespreizten Stellung verriegelt und welche Verriegelung aus einem Anschlag (49) besteht, welcher unter dem Druck der Feder (52) in seiner drehverhindernden Verriegelungsstellung verharrt und von Hand über eine äussere Drucktaste (55) betätigt werden kann, um seine Verschiebung in die passive Lage zu erzielen und infolgedessen das Gelenk freizugeben.

3. Faltrahmen mit anbaubarem Liegesitz für Sitz-Kinderwagen, gemäss Patentanspruch 1, in welchem die am Ende der genannten Arme (15 und 16) angebrachten Anlenkungen (20, 21 und 22, 23) und jene der Zugstreben (18 und 19) gemäss zwei zueinander senkrecht angeordneten Achsen doppelt sind.

4. Faltrahmen mit an demselben anbaubarem Liegesitz für Sitz-Kinderwagen, gemäss Patentanspruch 1, in welchem die beiden gelenkig miteinander verbundenen Hälften (42 und 43) der Querstrebe (41), welche die Vorderbeine (8 und 9) miteinander verbindet, durch eine elastische Verbindung (47) in ihrer auseinandergespreizten Lage gehalten werden.

5. Faltrahmen, mit an demselben anbaubarem Liegesitz für Sitz-Kinderwagen, gemäss Patentanspruch 1, in welchem am vorderen Ende der Holme (31 und 32), die der Abstützung des Liegesitzes zubestimmt sind, eine Verriegelung vorgesehen wurde, welche die Befestigung der Sitzstütze an die Seitenholme absichert und welche ein kreisförmiges Steuerorgan (37) beinhaltet, welches durch teilweise Drehung und vermittels eines exzentrisichen Vorsprunges (38) eine geradlinige Verschiebung des Riegels verursacht, welcher hierzu mit einer Führung (39) versehen ist, die eine radiale Verlängerung besitzt und innerhalb welcher sich der genannte exzentrische Vorsprung (38) bewegt.

6. Faltrahmen mit an demselben anbaubarem Liegesitz, für Sitz-Kinderwagen, gemäss Patentanspruch 1, dadurch gekennzeichnet, dass die beiden Sitz-Seitenteile unten miteinander durch zwei angelenkte gekreuzte Arme (69 und 70) verbunden sind, welche aus jeweils zwei Halbarmen bestehen, die an einem Zwischenpunkt (71) angelenkt sind, wobei die anderen Halbarme an einer Verriegelungsschere (72) zur Sicherung der ausgespreizten Gebrauchslage des Liegesitzes angelenkt sind, wobei die Verriegelung durch Federbauteile (73) sichergestellt wird.

7. Faltrahmen mit an demselben anbaubarem Liegesitz, für Sitz-Kinderwagen, gemäss Patentanspruch 6, in welchem die freien Enden der gekreuzten gelenkig verbundenen Arme (69 und 70) nach oben abgebogen (74) und drehbar in Aufnahmen (75) der seitlichen Armstützen (62) eingeführt sind.

8. Faltrahmen mit an demselben anbaubarem Liegesitz, für Sitz-Kinderwagen, gemäss Patentanspruch 6, an welchem Mittel vorgesehen worden sind, damit bei Anbau des Liegesitzes an den Rahmen des Sitzkinderwagens die Verriegelungsschere (72) entriegelt wird, welche die gelenkig verbundenen Arme (69 und 70) blockiert, wodurch der Liegesitz zusammen mit dem Sitzkinderwagen in der Querrichtung zusammengefaltet werden kann.

9. Faltrahmen mit an demselben anbaubarem Liegesitz, für Sitz-Kinderwagen, gemäss Patentanspruch 8, in welchem die genannten Mittel die Form einer abgebogenen Stange (76) annehmen, welche quer (78) an einem der Längsstützen (61) des Sitzrahmens angelenkt ist und an einem Ende (77) aus der entsprechenden seitlichen Armstütze (62) herausragt. Bei Auftreffen auf dem Seitenholm (31) des Sitzkinderwagenrahmens beim Anbau des Liegesitzes an letzterem, erfährt die genannte abgebogene Stange (76) ein Drehung, die auf das andere Ende (79) derselben übertragen wird, welches einen der verlängerten Arme (80) der Verriegelungsschere (72) verschiebt und so die Schere entriegelt.

10. Faltrahmen mit an demselben anbaubarem Liegesitz für Sitz-Kinderwagen, gemäss Patentanspruch 9, in welchem die abgebogene Stange (76) mit Federbauteilen (81) in Verbindung steht, die zum Zweck haben, die Stange in ihrer Ruhestellung zu erhalten.

11. Faltrahmen mit an demselben anbaubarem Liegesitz für Sitzkinderwagen, gemäss Patentanspruch 6, bei welchem die seitlichen Verriegelungsmittel (65) der geneigten Lage der Rücklehne von einer gemeinsamen Zentralsteuerung (82) entriegelt werden, welche vermittels entsprechender auseinanderstrebenden Zugstreben (83) dasselbe gelenkig mit den genannten seitlichen Mitteln verbinden.

12. Faltrahmen mit an demselben anbaubarem Liegesitz für Sitzkinderwagen, gemäss Patentanspruch 11, in welchem die gemeinsame Zentralsteuerung (82) längs einer Stütze (84) verschiebbar ist, welche am Anlenkpunkt der beiden sich kreuzenden Arme (85 und 86) ihrerseits verschiebbar befestigt ist, welche Arme die beiden Längsstützen (64) des Rahmens der nachgiebigen Rücklehne (63) miteinander verbinden.

13. Faltrahmen mit an demselben anbaubarem Liegesitz für Sitzkinderwagen, gemäss Patentanspruch 6, an welchem die Beinstütze nachgiebig ausgeführt (88) und mit einem Rahmen ausgestattet ist, welcher zwei Seitenstützen (89) beinhaltet, die mit Verriegelungsorganen (90) zur Verriegelung der Beinstütze in den verschiedenen Neigungsstellungen derselben ausgestattet sind, an welche koaxial drehbare entsprechende Winkelbauteile (91) angebaut sind, die ihrerseits frontal (92) miteinander gelenkig verbunden sind.

14. Faltrahmen mit an demselben anbaubarem Liegesitz für Sitzkinderwagen, gemäss Patentanspruch 13, bei welchem die seitlichen Stützen (89) des Rahmens der Beinstütze (66) unten jeweils mit Blöcken (93) ausgestattet sind, die eine schräge Betätigungsfläche aufweisen, dank welcher die sich in unterer Stellung befindliche Beinstütze beim Querzusammenfalten des Liegesitzes von den am Sitz angelenkten, sich kreuzenden Armen (69 und 70) nach oben verschoben wird.

15. Faltrahmen mit an demselben anbaubarem Liegesitz gemäss Patentanspruch 6, in welchem der frontal angelenkte Teil (97, 98, 99) der Schranke (67) sich nach dem Sitzinneren zu faltet und Federbauteile (100) beinhaltet, welche zum Zweck haben, denselben in Gebrauchsstellung zu erhalten.

## Revendications

1. Châssis pliant, avec siège-berceau accouplable à celui-ci pour poussette d'enfant, ce châssis comprenant :
- un guidon (1) en U renversé, avec articulation selon l'axe (6) dans son troncon médian, qui se raccorde par glissement de ses branches latérales (4 et 5) aux pieds-supports avant (8 et 9), glissement guidé par les brides (10 et 11); sur ces branches latérales se connectent les brides-guides correspondantes (24 et 25), sur lesquelles s'articulent grâce à un goujon (26) les extrémités supérieures des pieds-supports arrière correspondantes (27,28);
- une pièce approximativement en forme de U, munie des bras verticaux (13 et 14), dont le tronçon intermédiaire se compose de deux bras (15 et 16) entrecroisés grâce à une articulation en position transversale, chacun des bras verticaux (13 et 14) étant articulé à sa partie supérieure par un goujon (12) à l'extrémité supérieure de la bride correspondante (10,11) et articulé à la partie inférieure par les goujons (29) dans la zone médiane des pieds-supports arrière (27 et 28);
- deux longerons latéraux (31 et 32) servant de support amovible au siège, dont les longerons s'articulent à la partie arrière sur les bras verticaux (13 et 14) et
- une traverse (41) à articulation intermédiaire qui unit les pieds-supports arrière (8 et 9), et le siège-berceau comprenant :
- le châssis du siège flexible (60) qui est muni de deux supports latéraux longitudinaux (61);
- deux repose-bras latéraux (62) munis d'un appuie-bras avant (67) avec trois tronçons articulés (97,98,99);
- le bâti du dossier flexible (63) à montage articulé avec la partie inférieure du bâti du siège (60);
- les systèmes de blocage latéraux (65) servant à bloquer le dossier (63) dans ses différentes positions d'inclinaison et
- un repose-pieds (66)
caractérisé par le fait que les bras entrecroisés (15 et 16) déjà mentionnés s'articulent par leurs extrémités inférieures sur les bras verticaux (13 et 14) et par leurs extrémités supérieures avec l'extrémité inférieure des branches (4 et 5) du guidon et par le fait que les tronçons inférieurs des bras entrecroisés (15 et 16) sont connectés par une articulation avec la zone intermédiaire du bras vertical (13 et 14) du côté opposé du châssis par des entretoises (18 et 19).

2. Châssis pliant, avec siège-berceau accouplable à celui-ci pour poussette d'enfant, conformément à la revendication 1, dans lequel l'articulation de l'axe central (6) du guidon (1) est munie d'un verrou (48) qui bloque la position de dépliage; ce verrou se compose d'une butée (49) qui est entraînée de manière élastique (52) vers sa position active anti-rotation et sur laquelle on exerce une pression manuelle grâce à un poussoir extérieur (55) afin de la déplacer vers sa position passive et d'obtenir ainsi la liberté de l'articulation.

3. Châssis pliant, avec siège-berceau accouplable à celui-ci pour poussette d'enfant, conformément à la revendication 1, dans lequel les articulations d'extrémité (20,21 et 22,23) des bras (15 et 16) déjà mentionnés et des entretoises (18 et 19) sont doubles selon deux axes orthogonaux.

4. Châssis pliant, avec siège-berceau accouplable à celui-ci pour poussettes d'enfants, conformément à la revendication 1, dans lequel les deux tronçons articulés (42 et 43) de la traverse (41) qui unit les pieds-supports avant (8 et 9) sont sollicités de manière élastique (47) vers leur position ouverte.

5. Châssis pliant, avec siège-berceau accouplable à celui-ci pour poussette d'enfant, conformément à la revendication 1, dans lequel on a prévu à l'extrémité avant des longerons (31 et 32) destinés à supporter le siège-berceau, un verrou qui garantit l'accouplement de celui-ci aux longerons et comprend une commande circulaire (37) qui, grâce à une rotation partielle et par l'intermédiaire d'une saillie excentrique (38) assure le déplacement rectiligne de la pièce de blocage (35), qui comprend à cet effet un encastrement (39) à extension radiale (40) où agit cette saillie excentrique (38).

6. Châssis pliant, à siège-berceau accouplable à celui-ci pour poussette d'enfant, conformément à la revendication 1, caractérisé par le fait que les deux côtés du siège sont reliés entre eux à la partie inférieure avec les deux bras entrecroisés (69 et 70) articulés, dont l'un des tronçons est articulé à son tour par un point intermédiaire (71), les autres tronçons de ces bras étant reliés entre eux par un compas (72) de blocage de la position dépliée d'utilisation du siège-berceau, ce blocage étant assuré par les dispositifs élastiques (73).

7. Châssis pliant à siège-berceau accouplable à celui-ci pour poussette d'enfant, conformément à la revendication 6, dans lequel les bras entrecroisés (69 et 70) articulés s'infléchissent par leurs extrémités libres vers le haut (74) et s'accouplent en offrant la possibilité d'une rotation coaxiale dans les deux logements (75) correspondant aux repose-bras latéraux.

8. Châssis pliant à siège-berceau accouplable à celui-ci pour poussette d'enfants, conformément à la revendication 6, dans lequel on a prévu des dispositifs qui, lors de l'accouplement du siège-berceau au châssis de la poussette, débloquent le compas (72) de blocage des bras articulés (69 et 70) permettant ainsi le pliage transversal du siège-berceau en même temps que le pliage du châssis de la poussette.

9. Châssis pliant, avec siège-berceau accouplable pour poussettes d'enfant, conformément à la revendication 8, dans lequel ces dispositifs sont constitués par une tige souple (76) qui s'articule transversalement (78) avec l'un des supports longitudinaux (61) du châssis du siège qui, par l'une des extrémités (77) dépasse du repose-bras latéral correspondant (62), et est actionnée de manière rotative lorsqu'elle bute contre le longeron latéral (31) du châssis de la poussette lorsqu'il s'accouple avec le siège-berceau, action giratoire qui est perçue à l'autre extrémité (79) de cette tige (76) et lors de sa rotation, repousse l'un des bras à rallonge (80) du compas (72) de blocage en le débloquant.

10. Châssis pliant, avec siège-berceau accouplable à celui-ci pour poussette d'enfant, conformément à la revendication 9, dans lequel la tige souple (76) est reliée aux dispositifs élastiques (81 ) qui tendent à la maintenir dans sa position inactive.

11. Châssis pliant, avec siège-berceau accouplable à celui-ci pour poussette d'enfant, conformément à la revendication 6, dans lequel les dispositifs latéraux de blocage (65) de la position inclinée du dossier sont débloqués par une commande commune centrale (82) qui, grâce à deux entretoises divergentes (93), l'articulent avec ces dispositifs latéraux.

12. Châssis pliant, avec siège-berceau accouplable à celui-ci pour poussette d'enfant, conformément à la revendication 11, dans lequel la commande commune centrale (82) est accouplée de manière mobile à un support (84) fixé au point d'articulation des deux bras entrecroisés (85 et 86) qui relient entre eux les deux supports longitudinaux (64) du châssis du dossier flexible (63).

13. Châssis pliant avec siège-berceau accouplable à celui-ci pour poussette d'enfant, conformément à la revendication 6, dans lequel le repose-pieds (88) est flexible et présente une armature munie de deux supports latéraux (89) munis de dispositifs de blocage (90) des différentes positions d'inclinaison du repose-pieds (66), auxquels s'accouplent avec possibilité de rotation coaxiale des éléments angulaires (91), reliés entre eux à l'avant par l'articulation (92).

14. Châssis pliant avec siège-berceau accouplable à celui-ci pour poussette d'enfant, conformément à la revendication 13, dans lequel les supports latéraux (89) de l'armature du repose-pieds (66) sont munis à la partie inférieure de blocs (93) à face active oblique grâce auxquels, si le repose-pieds se trouve en position basse, il est repoussé vers le haut par les bras entrecroisés articulés du siège (69 et 70) lors du pliage transversal du siège-berceau.

15. Châssis pliant avec siège-berceau accouplable à celui-ci pour poussette d'enfant, conformément à la revendication 6, dans lequel le tronçon avant articulé (97, 88, 99) de la barre d'appui (67) se replie vers l'intérieur du siège et comporte des dispositifs élastiques (100) qui le maintiennent dans sa position d'utilisation.
